# EUROPÄISCHE PATENTSCHRIFT

(11) **EP 3 230 087 B1**
(45) Veröffentlichungstag und Bekanntmachung des Hinweises auf die Patenterteilung: **12.12.2018**
(21) Anmeldenummer: 15775212.2
(22) Anmeldetag: 07.10.2015
(51) Int. Cl.: B60C 11/03, B60C 11/13

(54) **FAHRZEUGLUFTREIFEN**
A PNEUMATIC TIRE FOR A VEHICLE
PNEUMATIQUE DE VEHICULE

(30) Priorität: 11.12.2014 DE 102014225613
(43) Veröffentlichungstag der Anmeldung: 18.10.2017
(73) Patentinhaber: Continental Reifen Deutschland GmbH, 30165 Hannover (DE)
(72) Erfinder: BEHR, Ulrich, 30167 Hannover (DE); DOMSCHEIT, Andreas, 30459 Hannover (DE); RITTWEGER, Stefan, 30826 Garbsen (DE)
(74) Vertreter: Preusser, Andrea
(86) Internationale Anmeldenummer: PCT/EP2015/073075
(87) Internationale Veröffentlichungsnummer: WO 2016/091417

(56) Entgegenhaltungen:
- EP-A1- 2 394 823
- EP-A1- 2 535 207
- EP-A2- 1 661 732
- EP-A2- 2 316 666
- US-A1- 2012 285 592

## Beschreibung

Die Erfindung betrifft einen Fahrzeugluftreifen in Radialbauart mit einem Laufstreifen mit zumindest einem laufstreifeninnenseitig von einer Umfangsrille begrenzten schulterseitigen Profilband, in welchem Querrillen ausgebildet sind, die innerhalb des Profilbandes enden, wobei die Umfangsrille von zwei Rillenflanken und einem in Umfangsrichtung verlaufenden Rillengrund begrenzt ist und eine entlang des Profilbandes verlaufende Randkante aufweist.

Fahrzeugluftreifen der eingangs genannten Art sind in unterschiedlichen Ausführungsvarianten bekannt. Dabei sind die in den schulterseitigen Profilbändern verlaufenden Querrillen übereinstimmend lang ausgeführt, um einen gleichmäßigen Abrieb sicherzustellen.

Derartige Fahrzeugluftreifen sind beispielsweise aus der US 2012/0285592 A1 und der EP 2 316 666 A2 bekannt. Der Laufstreifen dieser Reifen weist jeweils ein schulterseitiges Profilband mit innerhalb des Profilbandes endenden, gleich lang ausgeführten Querrillen auf, wobei das Profilband durch eine gerade in Umfangsrichtung umlaufende Randkante begrenzt ist.

Aus der EP 2 535 207 A1 und der EP 2 394 823 A1 sind weitere Fahrzeugluftreifen mit Laufstreifen mit schulterseitigen Profilbändern bekannt. Zumindest eines der Profilbänder ist von einer Umfangsrille begrenzt, welche eine das Profilband entlangverlaufende, in Draufsicht wellenförmig Randkante aufweist, die gemeinsam mit der anschließenden Rillenflanke im Profilband in Umfangsrichtung aufeinander folgende Einbuchtungen bildet.

Die im Profilband verlaufenden Querrillen weisen übereinstimmende Erstreckungslängen auf.

Die EP 1 661 732 A2 offenbart einen Fahrzeugluftreifen mit einem Laufstreifen, welcher in jeder Hälfte parallel zueinander verlaufende Schrägrillen aufweist, die bis in die schulterseitigen Profilbänder hineinragen. Die schulterseitigen Profilbänder sind mit Querrillen versehen und jeweils durch eine Umfangsrille begrenzt, welche laufstreifeninnenseitig an der Laufstreifenperipherie eine in Draufsicht wellenförmig verlaufende Randkante aufweist.

Der Erfindung liegt die Aufgabe zugrunde, bei einem Fahrzeugluftreifen der eingangs genannten Art die Umfangs- und die Quersteifigkeit des schulterseitigen Profilbandes zur Verbesserung der Handlingeigenschaften des Fahrzeugluftreifens beeinflussen zu können, wobei das Abrollgeräusch nicht verschlechtert werden soll und ein gleichmäßiger Abrieb des Laufstreifens gewährleistet sein soll.

Gelöst wird die gestellte Aufgabe erfindungsgemäß dadurch, dass Querrillen mit einer ersten Erstreckungslänge und Querrillen mit einer gegenüber der ersten Erstreckungsläng kleineren zweiten Erstreckungslänge vorgesehen sind, wobei die Erstreckungslängen vom Rand der Bodenaufstandsfläche in axialer Richtung ermittelt sind, wobei in Umfangsrichtung abwechselnd zumindest eine kürzere und zumindest eine längere Querrille aufeinanderfolgen, wobei die entlang des Profilbandes verlaufende Randkante gemeinsam mit der anschließenden Rillenflanke im Profilband in Umfangsrichtung aufeinander folgende Einbuchtungen bildet, welche sich in Umfangsrichtung jeweils im Wesentlichen über den Bereich zwischen den in Umfangsrichtung benachbarten längeren Querrillen erstrecken und wobei die Randkante ihre größte axiale Auslenkung in das Profilband hinein jeweils im Bereich der zwischen den längeren Querrillen befindlichen kürzeren Querrille aufweist, wobei die größte axiale Auslenkung 2 mm bis 5 mm beträgt.

Durch das Vorsehen von Querrillen mit zwei unterschiedlichen Erstreckungslängen, die in Umfangsrichtung abwechselnd aufeinander folgen, kann die Steifigkeit des Profilbandes beeinflusst und daher die Kraftübertragung vom Reifen auf die Straße verbessert werden. Die ungleich langen Querrillen verursachen jedoch eine gewisse ungleichmäßige Gummiverteilung im Profilband, die durch die erfindungsgemäß vorgesehenen Einbuchtungen bei der Umfangsrille ausgeglichen wird. Nachdem diese Einbuchtungen in Umfangsrichtung eine relativ große Erstreckung, aber nur eine geringe "Tiefenerstreckung" in das Profilband aufweisen, wird einerseits das Abrollgeräusch nicht negativ beeinflusst und andererseits wird ein gleichmäßiger Abrieb sichergestellt.

Bei einer bevorzugten für das Abrollgeräusch vorteilhaften Ausführungsform der Erfindung verläuft die Randkante entlang der Einbuchtungen im Wesentlichen flach V-förmig, jedoch insgesamt gerundet, in das Profilband hinein.

Dabei kann ferner die Randkante im Bereich zwischen den in Umfangsrichtung aufeinanderfolgenden Einbuchtungen jeweils entlang einer Ausbuchtung verlaufen. Die Randkante weist daher insgesamt einen gerundeten, für die Generierung des Abrollgeräusches besonders günstigen Verlauf auf. Die oben erwähnte größte axialer Auslenkung der Randkante in das Profilband hinein bezieht sich auf die axial am nächsten bei der Umfangsrille bzw. deren Rillengrund liegenden Stellen im Verlauf der Randkante.

Ein gleichmäßiger Abrieb wird insbesondere dadurch unterstützt, dass sich der Winkel der Rillenflanke gegenüber der radialen Richtung entlang ihrer Erstreckung bei den Einbuchtungen im Wesentlichen kontinuierlich und derart ändert, dass der Winkel jeweils an der Stelle mit der größten axialen Auslenkung der Randkante am größten ist. Dabei beträgt der Winkel der Rillenflanke gegenüber der radialen Richtung im Bereich zwischen in Umfangsrichtung aufeinanderfolgenden Einbuchtungen von 0° bis 10°, an den Stellen mit der größten axialen Auslenkung der Randkanten von 12° bis 20°.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigt
Fig. 1 eine schematische Draufsicht auf einen Umfangsabschnitt eines Teilbereiches eines Laufstreifens eines Fahrzeugluftreifens mit einer Ausführungsvariante der Erfindung und
Fig. 2 und Fig. 3 je eine Schnittdarstellung entlang der Linie II-II bzw. der Linie III-III aus Fig. 1.

Die Erfindung befasst sich mit einer speziellen Ausgestaltung von schulterseitig verlaufenden Umfangsrillen bzw. der mit dieser Ausgestaltung einhergehenden Ausführung von schulterseitig angeordneten Profilpositiven, die an diese Umfangsrillen anschließen, in einem Laufstreifen eines Fahrzeugluftreifens in Radialbauart, insbesondere für Personenkraftwagen oder Vans.

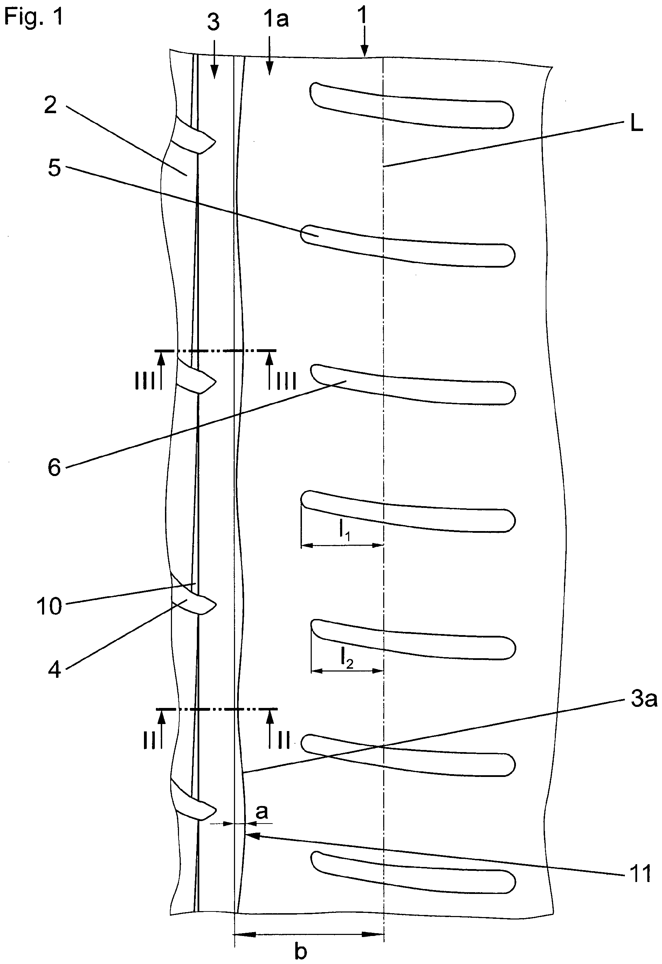

Fig. 1 zeigt ein schulterseitiges Profilband 1, welches von weiteren laufstreifeninnenseitig angeordneten Profilstrukturen 2 durch eine Umfangrille 3 getrennt ist. Bei der dargestellten Ausführung sind diese Profilstrukturen 2 blockartige Profilpositive, zwischen welchen in die Umfangsrille 3 einmündende Quer- oder Schrägrillen 4, welche lediglich angedeutet sind, verlaufen.

Die Linie L bezeichnet den einen im Profilband 1 verlaufenden Rand des Laufstreifens und damit den einen seitlichen Rand der bodenberührenden Fläche bzw. der Bodenaufstandsfläche, die dem statisch ermittelten Footprint des Reifens gemäß E.T.R.T.O.-Standards (Last bei 70 % der Tragfähigkeit bei einem Innendruck von 2,5 bar und einem Innendruck von 85 % von 2,5 bar) entspricht. Innerhalb der Bodenaufstandsfläche weist das Profilband 1 eine maximale Breite b auf, die insbesondere 20 % bis 30 % der Breite des Laufstreifens in der Bodenaufstandsfläche beträgt. Im Profilband 1 ist eine Vielzahl von in Umfangsrichtung voneinander unter üblichen Abständen und zueinander parallel verlaufenden Querrillen 5, 6 angeordnet, welche im Wesentlichen in axialer Richtung verlaufen und an der Profiloberfläche beispielsweise eine Breite von 2 mm bis 5 mm aufweisen. Die Querrillen 5 weisen innerhalb der Bodenaufstandsfläche eine in axialer Richtung ermittelte Erstreckungslänge l₁ auf, welche größer ist als die Erstreckungslänge l₂ der Querrillen 6. In Umfangsrichtung folgen abwechselnd eine kürzere und eine längere Querrille 5, 6 aufeinander. Innerhalb der Bodenaufstandsfläche weisen die Querrillen 5, 6 eine Tiefe auf, die zumindest 60 % der für den betreffenden Reifen vorgesehenen maximalen Profiltiefe, die zwischen 6 mm und 8,5 mm gewählt wird, beträgt. Die Querrillen 5, 6 verlaufen ferner über die Bodenaufstandsfläche hinaus, wobei ihre Tiefe in diesem Bereich kontinuierlich geringer wird. Die Querrillen 5, 6 enden innerhalb des Profilbandes 1, sodass der Umfangsrille 3 benachbart im Profilband 1 ein rippenartig umlaufender Abschnitt la vorhanden ist, welcher bis auf gegebenenfalls vorgesehene, schmale Einschnitte, die nicht dargestellt sind, unstrukturiert ausgebildet ist.

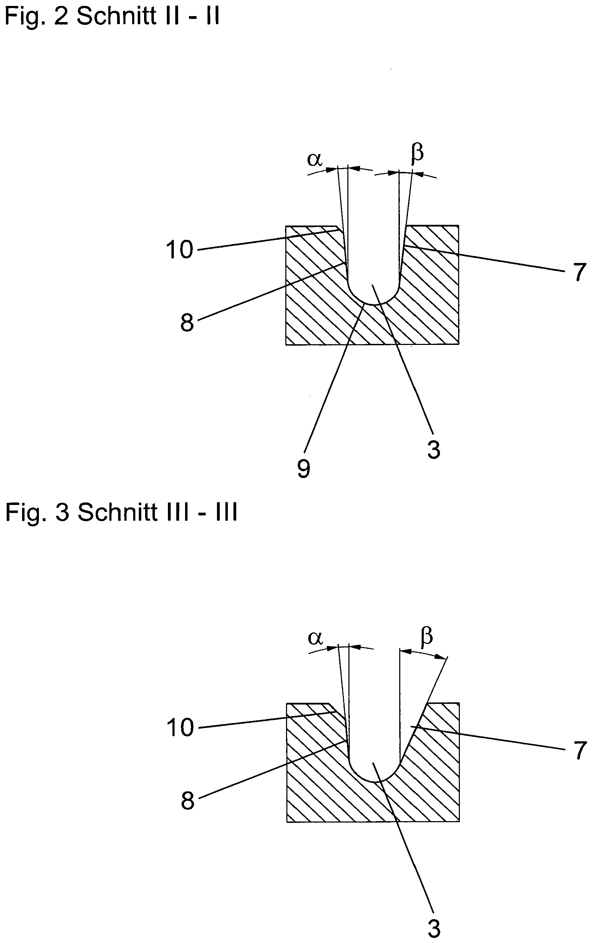

Wie insbesondere Fig. 2 und Fig. 3 zeigen, ist die Umfangsrille 3 von einer entlang des Profilbandes 1 verlaufenden Rillenflanke 7, einer dieser gegenüber verlaufenden Rillenflanke 8 sowie einem die Rillenflanken 7, 8 verbindenden Rillengrund 9 begrenzt. Die Rillenflanke 8 verläuft unter einem Winkel α von 3° bis insbesondere 10° zur radialen Richtung und weist bei der gezeigten Ausführung an der Laufstreifenoberfläche eine Fase 10, eine schmale Schrägfläche, auf, welche insbesondere in an sich bekannter Weise ausgeführt ist. Die entlang des Profilbandes 1 verlaufende Rillenflanke 7 ändert auf spezielle Weise in Umfangsrichtung ihren Neigungswinkel β gegenüber der radialen Richtung.

Die an der Laufstreifenoberfläche entlang des Profilbandes 1 verlaufende Randkante 3a bildet mitsamt der anschließenden Rillenflanke 7 im Profilband 1 in Umfangsrichtung aufeinanderfolgende Einbuchtungen 11 und weist dabei insgesamt einen gerundeten Verlauf auf. Die Einbuchtungen 11 erstrecken sich jeweils im Wesentlichen über den Bereich zwischen in Umfangsrichtung benachbarten längeren Querrillen 5, wobei die Randkanten 3a bei den zwischen den Querrillen 5 verlaufenden kürzeren Querrillen 6 ihre größte axiale Auslenkung a in das Profilband 1 hinein aufweisen, wobei a 2 mm bis 5 mm beträgt.

Die Einbuchtungen 11 folgen in Umfangsrichtung im Wesentlichen aufeinander, wobei in jenem Bereich, wo zwei in Umfangsrichtung aufeinanderfolgenden Einbuchtungen 11 aneinander anschließen, eine Art Ausbuchtung der Randkante vorliegen kann. Hier ist der Winkel β, den die Rillenflanke 7 mit der radialen Richtung einschließt, am kleinsten, in Richtung der größten axialen Auslenkung a nimmt der Winkel β jeweils kontinuierlich zu und ist bei der größten axialen Auslenkung a der Randkante 3a am größten. Der erwähnte kleinste Winkel β beträgt 3° bis 8°, der erwähnte größte Winkel β 12° bis 20°.

### Bezugsziffernliste

- 1: Profilband
- 1a: rippenartig umlaufender Abschnitt
- 2: Profilpositve
- 3: Umfangsrille
- 3a: Randkante
- 4: Quer- oder Schrägrille
- 5: Querrille
- 6: Querrille
- 7: Rillenflanke
- 8: Rillenflanke
- 9: Rillengrund
- 10: Fase
- 11: Einbuchtung
- a: Auslenkung
- α, β: Winkel
- l₁, l₂: Erstreckungslänge

## Patentansprüche

1. Fahrzeugluftreifen in Radialbauart mit einem Laufstreifen mit zumindest einem laufstreifeninnenseitig von einer Umfangsrille (3) begrenzten schulterseitigen Profilband (1), in welchem Querrillen (5, 6) ausgebildet sind, die innerhalb des Profilbandes (1) enden, wobei die Umfangsrille (3) von zwei Rillenflanken (7, 8) und einem in Umfangsrichtung verlaufenden Rillengrund (9) begrenzt ist und eine entlang des Profilbandes (1) verlaufende Randkante (3a) aufweist,
**dadurch gekennzeichnet,**
**dass** Querrillen (5) mit einer ersten Erstreckungslänge (l₁) und Querrillen (6) mit einer gegenüber der ersten Erstreckungslänge (l₁) kleineren zweiten Erstreckungslänge (l₂) vorgesehen sind, wobei die Erstreckungslängen (l₁, l₂) vom Rand (L) der Bodenaufstandsfläche in axialer Richtung ermittelt sind, wobei in Umfangsrichtung abwechselnd zumindest eine kürzere und zumindest eine längere Querrille (5, 6) aufeinanderfolgen,
wobei die entlang des Profilbandes (1) verlaufende Randkante (3a) gemeinsam mit der anschließenden Rillenflanke (7) im Profilband (1) in Umfangsrichtung aufeinander folgende Einbuchtungen (11) bildet, welche sich in Umfangsrichtung jeweils im Wesentlichen über den Bereich zwischen den in Umfangsrichtung benachbarten längeren Querrillen (5) erstrecken und wobei die Randkante (3a) ihre größte axiale Auslenkung (a) in das Profilband (1) hinein jeweils im Bereich der zwischen den längeren Querrillen (5) befindlichen kürzeren Querrille (6) aufweist, wobei die größte axiale Auslenkung (a) 2 mm bis 5 mm beträgt.

2. Fahrzeugluftreifen nach Anspruch 1, **dadurch gekennzeichnet, dass** die Randkante (3a) entlang der Einbuchtungen (11) im Wesentlichen flach V-förmig, jedoch insgesamt gerundet, in das Profilband (1) hinein verläuft.

3. Fahrzeugluftreifen nach Anspruch 1, **dadurch gekennzeichnet, dass** die Randkante (3a) im Bereich zwischen den in Umfangsrichtung aufeinander folgende Einbuchtungen (11) ebenfalls gerundet und entlang einer Ausbuchtung verläuft.

4. Fahrzeugluftreifen nach Anspruch 1 oder 2, **dadurch gekennzeichnet, dass** sich der Winkel (β) der Rillenflanke (7) gegenüber der radialen Richtung entlang ihrer Erstreckung bei den Einbuchtungen (11) im Wesentlichen kontinuierlich und derart ändert, dass der Winkel (β) jeweils an der Stelle mit der größten axialen Auslenkung der Randkante (3a) am größten ist.

5. Fahrzeugluftreifen nach einem der Ansprüche 1 bis 3, **dadurch gekennzeichnet, dass** der Winkel (β) der Rillenflanke (7) gegenüber der radialen Richtung im Bereich zwischen in Umfangsrichtung aufeinander folgenden Einbuchtungen (11) bzw. in Bereich etwaiger Ausbuchtungen 3° bis 8° beträgt.

6. Fahrzeugluftreifen nach einem der Ansprüche 1 bis 3, **dadurch gekennzeichnet, dass** der Winkel (β) der Rillenflanke (7) gegenüber der radialen Richtung an der Stelle mit der größten axialen Erstreckung der Randkante (3a) 12° bis 20° beträgt.

## Claims

1. Pneumatic vehicle tire of radial construction, having a tread with at least one shoulder-side profile strip (1), which is delimited toward the inner side of the tread by a circumferential groove (3) and in which there are formed transverse grooves (5, 6), which end within the profile strip (1), wherein the circumferential groove (3) is delimited by two groove flanks (7, 8) and by a groove base (9) extending in a circumferential direction and has a boundary edge (3a) extending along the profile strip (1),
**characterized**
**in that** transverse grooves (5) having a first length of extent (l₁) and transverse grooves (6) having a second length of extent (l₂) smaller than the first length of extent (l₁) are provided, wherein the lengths of extent (l₁, l₂) are measured in an axial direction from the boundary (L) of the ground contact patch, wherein at least one relatively short and at least one relatively long transverse groove (5, 6) alternate successively in the circumferential direction,
wherein the boundary edge (3a) extending along the profile strip (1) forms, together with the adjoining groove flank (7) in the profile strip (1), indentations (11) which follow one another in succession in the circumferential direction and which, in the circumferential direction, each extend substantially over the region between the relatively long transverse grooves (5) that are adjacent in the circumferential direction, and wherein the boundary edge (3a) has its greatest axial excursion (a) into the profile strip (1) in each case in the region of the relatively short transverse groove (6) situated between the relatively long transverse grooves (5), wherein the greatest axial excursion (a) is 2 mm to 5 mm.

2. Pneumatic vehicle tire according to Claim 1, **characterized in that**, along the indentations (11), the boundary edge (3a) extends into the profile strip (1) substantially in the manner of a shallow V but with a rounded shape overall.

3. Pneumatic vehicle tire according to Claim 1, **characterized in that** the boundary edge (3a) is likewise rounded and extends along a bulge in the region between the indentations (11) following one another in the circumferential direction.

4. Pneumatic vehicle tire according to Claim 1 or 2, **characterized in that** the angle (β) of the groove flank (7) relative to the radial direction changes at the indentations (11) substantially continuously and in such a way, along its extent, that the angle (β) is in each case greatest at the point with the greatest axial excursion of the boundary edge (3a).

5. Pneumatic vehicle tire according to one of Claims 1 to 3, **characterized in that** the angle (β) of the groove flank (7) relative to the radial direction is 3° to 8° in the region between indentations (11) following one another in the circumferential direction or in the region of any bulges.

6. Pneumatic vehicle tire according to one of Claims 1 to 3, **characterized in that** the angle (β) of the groove flank (7) relative to the radial direction is 12° to 20° at the point with the greatest axial extent of the boundary edge (3a).

## Revendications

1. Pneumatique de véhicule de construction radiale comprenant une bande de roulement avec au moins une bande profilée (1) du côté de l'épaulement, limitée du côté intérieur de la bande de roulement par une rainure périphérique (3), dans laquelle sont réalisées des rainures transversales (5, 6) qui se terminent à l'intérieur de la bande profilée (1), la rainure périphérique (3) étant limitée par deux flancs de rainure (7, 8) et un fond de rainure (9) s'étendant dans la direction périphérique et présentant une arête de bord (3a) s'étendant le long de la bande profilée (1),
**caractérisé en ce que**
des rainures transversales (5) ayant une première longueur d'étendue (l₁) et des rainures transversales (6) ayant une deuxième longueur d'étendue (l₂) plus petite que la première longueur d'étendue (l₁) sont prévues, les longueurs d'étendue (l₁, l₂) étant déterminées depuis le bord (L) de la surface d'appui au sol dans la direction axiale, au moins une rainure transversale plus courte et au moins une rainure transversale plus longue (5, 6) se succédant en alternance dans la direction périphérique, l'arête de bord (3a) s'étendant le long de la bande profilée (1) formant conjointement avec le flanc de rainure adjacent (7) dans la bande profilée (1) des renfoncements (11) successifs dans la direction périphérique qui s'étendent dans la direction périphérique à chaque fois essentiellement sur la région comprise entre les rainures transversales plus longues (5) adjacentes dans la direction périphérique, et l'arête de bord (3a) présentant sa plus grande déviation axiale (a) dans la bande profilée (1) à chaque fois dans la région de la rainure transversale plus courte (6) se trouvant entre les rainures transversales plus longues (5), la plus grande déviation axiale (a) mesurant 2 mm à 5 mm.

2. Pneumatique de véhicule selon la revendication 1, **caractérisé en ce que** l'arête de bord (3a) s'étend le long des renfoncements (11) essentiellement en forme de V aplati, mais arrondi dans l'ensemble, dans la bande profilée (1).

3. Pneumatique de véhicule selon la revendication 1, **caractérisé en ce que** l'arête de bord (3a) s'étend dans la région entre les renfoncements (11) successifs dans la direction périphérique également sous forme arrondie et le long d'un bombement.

4. Pneumatique de véhicule selon la revendication 1 ou 2, **caractérisé en ce que** l'angle (β) du flanc de rainure (7) varie essentiellement en continu, par rapport à la direction radiale, le long de son étendue dans les renfoncements (11) et de telle sorte que l'angle (β) est à chaque fois maximal à l'endroit avec la plus grande déviation axiale de l'arête de bord (3a).

5. Pneumatique de véhicule selon l'une quelconque des revendications 1 à 3, **caractérisé en ce que** l'angle (β) du flanc de rainure (7), par rapport à la direction radiale dans la région entre des renfoncements (11) successifs dans la direction périphérique et/ou dans la région de bombements éventuels, mesure 3° à 8°.

6. Pneumatique de véhicule selon l'une quelconque des revendications 1 à 3, **caractérisé en ce que** l'angle (β) du flanc de rainure (7), par rapport à la direction radiale à l'endroit avec la plus grande étendue axiale de l'arête de bord (3a), mesure 12° à 20°.
